Europäisches Patentamt

European Patent Office

Office européen des brevets

(19)

(11) Numéro de publication : **0 473 563 B1**

(12)

# FASCICULE DE BREVET EUROPEEN

(45) Date de publication du fascicule du brevet :
**09.08.95 Bulletin 95/32**

(51) Int. Cl.⁶ : **F23N 5/24, F23N 5/00**

(21) Numéro de dépôt : **91870130.1**

(22) Date de dépôt : **23.08.91**

(54) **Appareil et procédé de chauffage.**

(30) Priorité : **24.08.90 BE 9000817**

(43) Date de publication de la demande :
**04.03.92 Bulletin 92/10**

(45) Mention de la délivrance du brevet :
**09.08.95 Bulletin 95/32**

(84) Etats contractants désignés :
**AT BE CH DE DK ES FR GB GR IT LI LU NL SE**

(56) Documents cités :
**EP-A- 0 075 602**
**US-A- 4 493 634**
**US-A- 4 561 840**
**US-A- 4 903 893**

(56) Documents cités :
**PATENT ABSTRACTS OF JAPAN,vol. 13, no.
65 (M-797)(3413)14 Fevrier 1989 & JP-A-63 267
828 (HITACHI HEATING APPLIANCE CO LTD)
4 Novembre 1988**

(73) Titulaire : **Goblet, Serge**
**Sloesveldstraat, 30**
**B-1560 Hoeilaart (BE)**

(72) Inventeur : **Goblet, Serge**
**Sloesveldstraat, 30**
**B-1560 Hoeilaart (BE)**

(74) Mandataire : **Vanderperre, Robert et al**
**Bureau Vander Haeghen S.A.**
**Rue Colonel Bourg 108 A**
**B-1040 Bruxelles (BE)**

EP 0 473 563 B1

## Description

La présente invention est relative à un appareil mobile de chauffage d'appoint d'un local. Cet appareil comprend un réservoir à pétrole relié à une mèche ou une zone de combustion et un mécanisme destiné à arrêter la combustion.

La présente invention est relative à un appareil mobile de chauffage d'un local, cet appareil comprenant un réservoir à pétrole surmonté d'une chambre vide percée de trous permettant le passage d'air dans le réservoir, et un porte-mèche situé au voisinage de ladite chambre. Dans cet appareil, le porte-mèche est muni d'un mécanisme pour manoeuvrer une mèche qui s'étend au moins partiellement dans le réservoir et dont l'extrémité adjacente au porte-mèche est destinée à être enflammée de manière à chauffer le local.

De tels appareils sont connus. Ils présentent l'inconvénient :

que la hauteur de la flamme de la mèche ou zone de combustion ne peut être réglée que de façon très limitée, cette hauteur pouvant varier entre 100% de la hauteur maximale de la flamme et environ 75 % de cette hauteur maximale, de sorte que ces appareils ne sont jamais munis de dispositifs de réglage agissant sur le mécanisme de manoeuvre de la mèche en fonction de la température désirée du local.

On connaît par les documents EP-A-0 473 563, JP-A-53 12045 et JP-A-61 09096 des poêles à pétrole équipés d'un système de sécurité actionné par des interrupteurs-détecteurs d'anomalies.

Dans ces documents, il n'est fait nullement référence à un système de sécurité comprenant un bilame qui à une température d'environ 26° C actionnera l'interruption de la combustion, de manière à assurer une teneur en CO et en $CO_2$ dans le local respectivement inférieure à 0,01 % et 1 %.

Les systèmes connus pour assurer une teneur en CO et en $CO_2$ dans le local respectivement inférieure à 0,01 % et 1 % font appel à des détecteurs coûteux.

Ainsi, on connaît par le document US-A-4,493,634 un appareil de chauffage à kerozène muni d'un dispositif de sécurité comprenant un détecteur de CO qui, lorsqu'il détecte une teneur en CO prédéterminée, génère un signal d'alarme et provoque, d'une part, la descente de la mèche et, d'autre part, le déplacement transversal d'un couvercle de manière à éteindre la flamme. Un tel détecteur de CO est coûteux et consomme beaucoup d'énergie.

On connaît également par le document EP-A-0 075 602 un dispositif de sécurité pour appareil de chauffage par combustion à fuel, ce dispositif comprenant un circuit détectant la déficience en $O_2$ du local.

Un tel circuit mesure la différence de température existant entre la température des fumées et la température du local. Lorsque le circuit détecte une décroissance de la différence de température jusqu'à une valeur prédéterminée correspondant à une teneur en $O_2$ dans le local de l'ordre de 18 %, ledit circuit commande l'arrêt de l'appareil de chauffage.

La détection de la température des fumées est délicate puisque la température à détecter est supérieure à 100°C. Une erreur de seulement 1 % ou de 1°C de la mesure détectée pour la température des fumées peut avoir des conséquences mortelles. En effet, si le circuit commet une erreur de détection de +1°C sur la différence de température, il n'arrêtera pas le fonctionnement de l'appareil en temps voulu, de sorte que la teneur en CO dans le local sera supérieure à la teneur critique lorsque le circuit arrêtera le fonctionnement de l'appareil. Enfin, puisque deux détecteurs de température sont utilisés dans le circuit selon EP-A-0075602, le circuit n'est pas à même de prendre en considération une erreur de mesure d'un détecteur par rapport à l'autre détecteur.

Selon un autre dispositif de sécurité, ce dernier comprend un système de lecture de la hauteur de la flamme. Dès que la hauteur de la flamme est inférieure au niveau de lecture du système, le dispositif actionne le mécanisme de manoeuvre de la mèche, de manière que l'extrémité de la mèche ne soit plus enflammée. Ce dispositif de sécurité est basé sur le principe qu'au plus la teneur en oxygène dans le local à chauffer diminue, au plus la hauteur de la flamme diminue.

Toutefois, ce dispositif de sécurité présente l'inconvénient que la flamme peut subir des mouvements dus à des courants d'air. Ces courants d'airs provoquent alors la non détection de la flamme par le système et donc l'arrêt de l'appareil de chauffage alors que la teneur en $CO_2$ dans le local et la température du local sont faibles. De plus, un appareil muni d'un tel dispositif présente l'inconvénient de permettre son fonctionnement lorsque la teneur en CO du local est supérieure à 0,01 %.

On connaît également des dispositifs de sécurité comprenant des unités d'analyse de gaz pour déterminer la présence et la teneur en CO dans l'air du local. De tels dispositifs présentent l'inconvénient d'être coûteux et consomment beaucoup d'énergie.

Le demandeur a remarqué qu'en mesurant uniquement la température du local, il est possible de déterminer un moment où le mécanisme de manoeuvre doit être actionné, de manière à ce que l'extrémité de la mèche ne soit plus enflammée pour éviter que l'air du local contienne plus de 0,01 % de CO et/ou de 0,8 ± 0,2 % de $CO_2$.

L'appareil de chauffage suivant l'invention, qui est un appareil du type décrit dans le premier paragraphe du présent mémoire, est muni d'un dispositif de sécurité comprenant un moyen qui a une température d'environ 26°C, agit sur un élément agissant sur une pièce du mécanisme d'arrêt de manière à assurer l'extinction automatique de la combustion avant que la teneur en CO dans le local soit supérieure à 0,01 % et que la teneur en $CO_2$ dans le local soit supérieure à environ 1 %, et sur un élément agissant sur l'organe de mise en fonctionnement pour l'amener dans sa position de non fonctionnement.

Avantageusement, l'appareil suivant l'invention comprend un dispositif de sécurité comprenant un circuit électrique dans lequel sont montés un moteur et un bilame porté par ledit appareil qui à une température d'environ 26° C permet le passage d'un courant au moteur qui entraîne alors un élément agissant sur une pièce du mécanisme d'arrêt de la combustion de manière à assurer l'extinction automatique de la combustion avant que la teneur en CO dans le local soit supérieure à 0,01 % et que la teneur en CO dans le local soit supérieure à environ 1 %, et ceci de façon définitive.

Par arrêt définitif de la combustion, on entend un arrêt de l'appareil qui nécessite une manipulation ou opération de l'utilisateur pour sa remise en fonctionnement. Ledit moteur actionne donc également un élément agissant sur l'organe ou la manette de mise en fonctionnement de l'appareil.

Dans une forme de réalisation, le dispositif de sécurité comprend en outre un contacteur monté dans un circuit, ce contacteur étant commandé par un ensemble associé à un moyen de mesure de la température du local, ledit ensemble comparant la température du local à la température du local lors de sa mise en fonctionnement et actionnant ledit contacteur lorsque la température du local est supérieure d'environ 15° C par rapport à la température du local lors de sa mise en fonctionnement pour permettre le passage d'un courant au moteur qui entraîne alors un élément agissant sur une pièce du mécanisme d'arrêt de la combustion de manière à assurer l'extinction automatique de la combustion avant que la teneur en CO dans le local soit supérieure à 0,01 % et que la teneur en $CO_2$ dans le local soit supérieure à environ 1 %, et un élément agissant sur l'organe de mise en fonctionnement pour la remettre dans sa position de non fonctionnement.

La présente invention a encore pour objet un procédé de chauffage d'un local à l'aide d'un appareil de chauffage selon l'invention.

Dans ce procédé, on actionne le mécanisme d'arrêt de la combustion lorsque la température du local est de 26° C, ou lorsque la température du local est de 26° C ou est supérieure de 15° C par rapport à la température du local lors de la mise en fonctionnement de l'appareil, de manière à assurer une teneur en CO inférieure à 0,01 % et une teneur en $CO_2$ inférieure à 0,8 %.

D'autres particularités et détails de l'invention ressortiront de la description détaillée suivante dans laquelle il est fait référence aux dessins ci-annexés.

Dans ces dessins :
- la figure 1 est une vue en perspective, partiellement en coupe, d'une partie d'un appareil suivant l'invention donné à titre d'exemple uniquement ;
- la figure 2 est une vue en perspective d'une forme d'exécution du dispositif de sécurité ;
- la figure 3 est une vue similaire à celle de la figure 2, si ce n'est que des parois servant de support du dispositif de sécurité sont partiellement arrachées ;
- la figure 4 est une vue similaire à celle de la figure 3 montrant la position du dispositif lors de la mise en fonctionnement de l'appareil ;
- la figure 5 est une vue similaire à celle de la figure 4 dans laquelle le fonctionnement du dispositif de sécurité est montré ;
- les figures 6 et 7 sont des vues de côté du dispositif montré à la figure 2, et
- les figures 8 et 9 sont des vues de côté du dispositif montré à la figure 4.

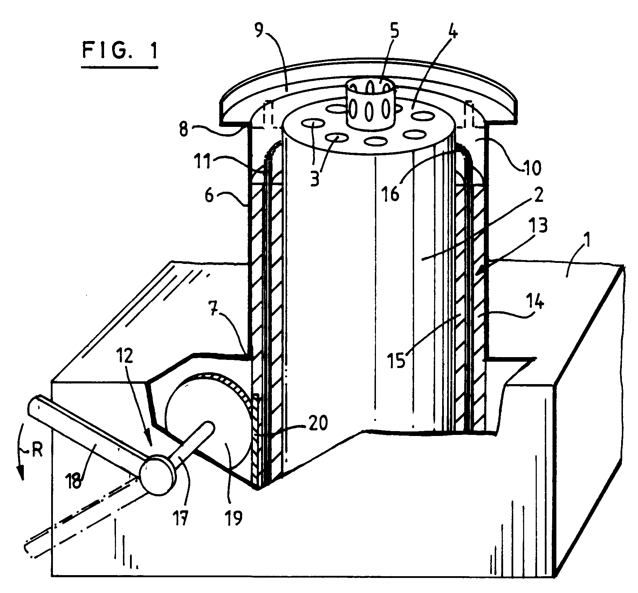

L'appareil montré à titre d'exemple uniquement à la figure 1 comprend un réservoir à pétrole 1 surmonté d'une chambre 2 percée de trous 3 permettant le passage d'air dans le réservoir 1. Cette chambre 2 est formée par un conduit dont une extrémité s'étend dans le réservoir 1 et dont l'autre extrémité est munie d'une plaque 4 sur laquelle est montée une buse d'aération 5.

Le conduit formant la chambre 2 est situé dans la partie centrale d'un tuyau 6 dont une extrémité 7 est solidaire du réservoir 1 et dont l'autre extrémité 8 porte un plateau annulaire 9. L'espace situé entre le conduit formant la chambre 2 et le tuyau 6 forme un canal 10 dans lequel une mèche 11 peut être déplacée (flèche V). Le déplacement de la mèche 11 dans le canal 10 est obtenu grace à un dispositif de manoeuvre 12.

La mèche 11 est portée par un porte-mèche 13 constitué de deux manchons concentriques 14, 15 entre lesquels la mèche 11 est coincée. Cette mèche 11 présente une première extrémité 16 située au-dessus du porte-mèche 13 et une deuxième extrémité non représentée s'étendant dans le réservoir 1. Le pétrole est amené à l'extrémité supérieure 16 par capillarité.

Le dispositif de manoeuvre 12 comprend un arbre 17 pouvant subir un mouvement de rotation R par rapport au réservoir 1. A une première extrémité de l'arbre est montée une manette 18 tandis qu'à l'autre extrémité est montée une roue dentée 19 dont des dents sont engagées dans des crans d'une crémaillère 20 solidaire du manchon extérieur 14 du porte-mèche 11. Il va de soi que le mécanisme de manoeuvre décrit ci-dessus est donné à titre d'exemple uniquement et que d'autres mécanismes connus peuvent être utilisés.

La rotation R de l'arbre 17 due au mouvement de la manette 18 provoque une rotation de la roue dentée 19, cette dernière grâce à la crémaillère 20 provoquant un déplacement vertical V du porte-mèche 13 (position indiquée en traits interrompus à la figure 1). Après cette rotation, l'appareil est prêt à fonctionner.

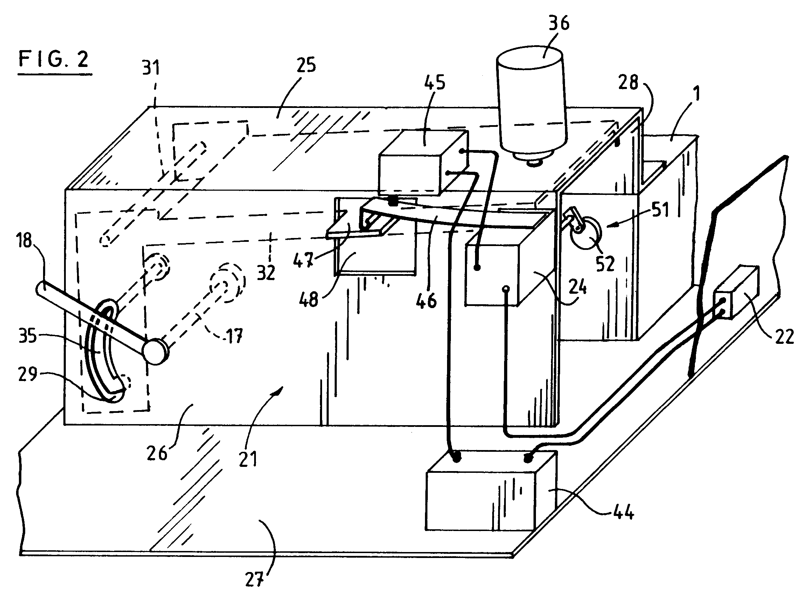

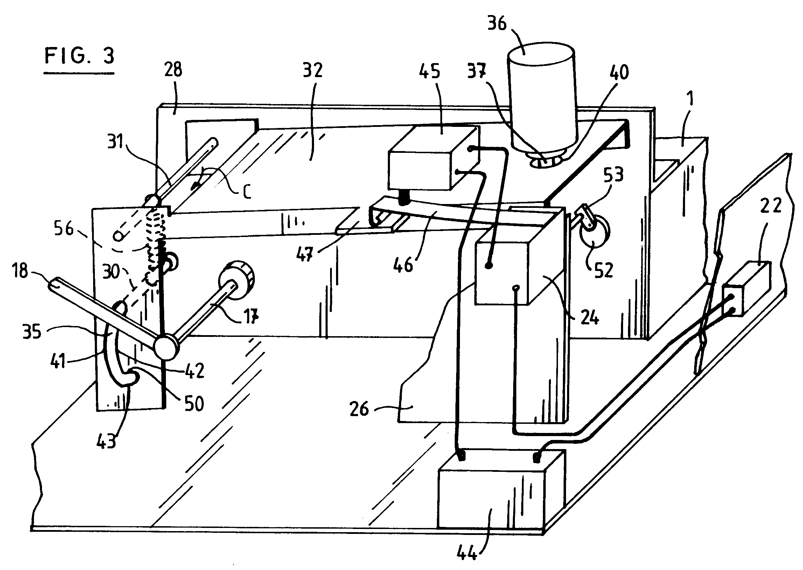

Aux figures 2 et 3 est représentée une partie d'un appareil suivant l'invention, muni d'un dispositif de sécurité désigné dans son ensemble par la numérotation de référence 21.

Ce dispositif de sécurité comprend un bilame 22 porté par l'enveloppe extérieure 23 (montrée uniquement en partie à la figure 2) de l'appareil. Ce bilame 22 qui sert de moyen de mesure de la température du local est monté dans un circuit électrique et permet le passage d'un courant vers un moteur 24 dont l'arbre porte un élément 51 agissant sur une pièce 32 du mécanisme de manoeuvre de la mèche, lorsque la température du local est supérieure à environ 26°C ± 3°C.

L'appareil comprend un cadre adjacent du réservoir 1, ce cadre portant une paroi horizontale 25, une paroi verticale avant 26 s'étendant entre le fond 27 de l'appareil et la paroi horizontale 25, et une paroi verticale arrière 28 s'étendant entre le réservoir 1 et la paroi horizontale 25.

La paroi verticale avant 26 présente un orifice dans lequel est engagée la tige 17, et une fente courbe 29 dans laquelle peut se déplacer un tenon 30 (voir figure 3) solidaire à la manette 18. Entre les parois verticales 26, 28 s'étend du côté supérieur droit une barre 31 servant d'articulation à une pièce 32. Cette pièce 32 est constituée d'un profilé en U renversé dont les ailes 33 sont prolongées par des oreilles 34 suspendues à la barre 31. Une oreille 35, adjacente à la paroi verticale 26, présente une fente 39 dans laquelle s'étend le tenon 30. Le profilé en U de la pièce 32 qui est sensiblement horizontal soumet la pièce 32 à un couple C puisque le centre de gravité de la pièce 32 est adjacent audit profilé. Le tenon 30 engagé dans la fente 35 permet de limiter la rotation de la pièce 32. De même, une butée constituée d'une masse 36 prolongée par une tige 37 portant un plateau 38, ladite tige 37 étant introduite dans une ouverture 39 de la paroi 25 et dans une ouverture 40 du profilé en U, limite la rotation possible de la pièce 32 autour de la barre 31.

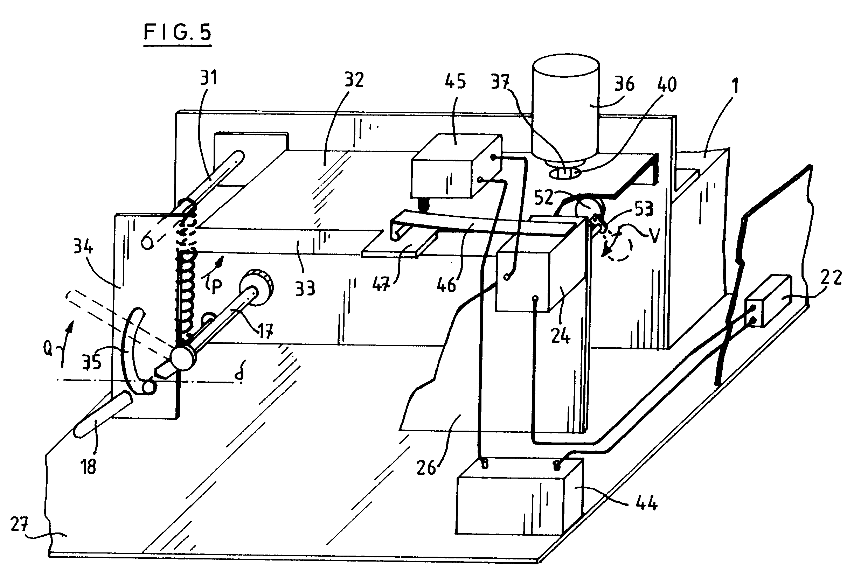

La fente 35 a une forme courbe présentant, un premier bord 41 en forme d'arc de cercle dont le centre est situé le long de l'axe de l'arbre 17 et un deuxième bord 42 en forme d'arc de cercle concentrique au premier, le rayon dudit deuxième bord étant inférieur au rayon dudit premier bord, lesdits bords étant reliés entre eux à leur extrémité inférieure par un contour 43 dont une partie 50 adjacente à l'extrémité inférieure du deuxième bord 42 s'étend dans un plan δ sensiblement parallèle à la barre 31 lorsque la pièce 32 a subi une rotation par rapport à cette barre 31 (position montrée à la figure 5).

Le circuit électrique du dispositif de sécurité montré aux figures 2 à 5 comprend :

- un bilame 22 dont les lames sont en contact l'une avec l'autre lorsque la température du local est de 26°C, une lame de ce bilame étant reliée au pole négatif d'une batterie 44, tandis que l'autre lame est reliée au moteur 24, et
- un interrupteur 45 dont une extrémité est reliée au pole positif de la batterie 44, tandis que l'autre extrémité est reliée au moteur 24, ledit interrupteur ouvrant le circuit électrique (c'est-à-dire empêchant le passage de courant dans ledit circuit) lorsque le porte-mèche 13 et la mèche 11 sont situés dans le canal 10 (position de la manette 18 représentée aux figures 2 et 3).

Cet interrupteur 45 est actionné par une lame ressort 46 dont une extrémité est solidaire du moteur 24 et dont l'autre extrémité prend appui sur une plaque 47 solidaire de la pièce 32, cette plaque 47 s'étendant à l'extérieur de la paroi 26 par une fenêtre 48 que présente cette dernière.

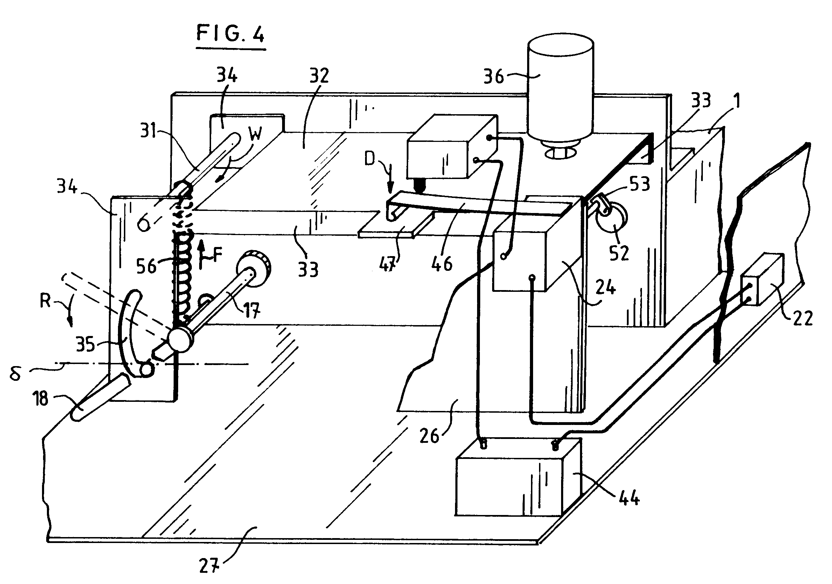

A la figure 4, on a représenté la disposition des différentes pièces du dispositif de sécurité lors de la mise en fonctionnement de l'appareil, c'est-à-dire lors de la rotation R de la manette 18 pour sortir la mèche 11 du canal 10 (voir figure 1). Cette rotation R de la manette 18 peut également actionner un système connu d'allumage électrique de la mèche.

Lors de la rotation R de la manette 18 montée sur l'arbre 17, le tenon glisse le long des bords de la fente 35 et une rotation W de la pièce 32 autour de la barre 31 a lieu.

La rotation R de la manette 18 se fait à l'encontre de l'action d'un ressort 56 s'étendant entre la barre 31 et le tenon 30.

En fin de rotation R de la manette 18, le tenon 30 glisse le long de la partie 50 du contour 43, cette partie 50 s'étendant, due à la rotation W de la pièce 32, dans un plan δ sensiblement horizontal et parallèle à la barre 31. De plus, le ressort 56 applique une force de rappel F sensiblement verticale sur le tenon 30 lorsque ce dernier glisse le long de ladite partie 50, de sorte que la pièce 32 et la manette 18 peuvent être maintenues dans la position montrée à la figure 5, c'est-à-dire dans la position dans laquelle le tenon prend appui sur la partie 50 du contour 43.

La rotation W de la pièce 32 provoque la rotation de la plaque 47 autour de la barre 31 et dès lors un déplacement D de l'extrémité de la lame ressort 46 prenant appui sur la plaque 47 par rapport à l'interrupteur 45, ce déplacement D permettant un contact électrique entre les deux extrémités de l'interrupteur.

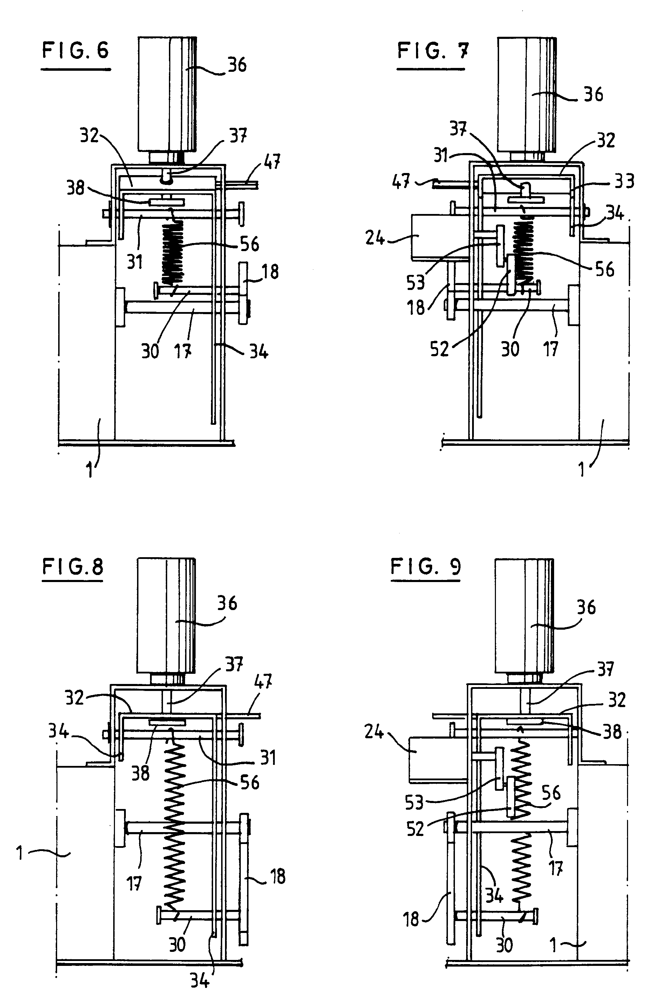

Aux figures 6 et 7 sont représentées des vues de côté de l'appareil montré aux figures 2 et 4.

A la figure 5, l'appareil montré à la figure 4 est représenté. Toutefois, dans cette figure, le mouvement de l'élément 51 porté par l'arbre du moteur 24 y est représenté pour montrer l'action dudit élément sur la pièce 32.

L'élément 51 est constitué d'un bras 53 dont une extrémité est solidaire de l'arbre du moteur 24 et dont l'autre extrémité porte une roulette 52. Cette roulette est montée excentrée sur un bout d'arbre solidaire du bras.

Lorsque le bras 53 est dans la position représentée en traits interrompus à la figure 5 et que l'appareil est en mode de fonctionnement (manette 18 en position basse) les extrémités de l'interrupteur 45 sont en contact l'une avec l'autre. Toutefois, tant qu'une température supérieure à 26°C n'est pas détectée par le bilame 22, aucun courant ne parcourt le circuit électrique puisque les lames du bilame 22 ne sont pas en contact l'une avec l'autre.

Dès qu'une température de 26°C est détectée dans le local, les lames du bilame 22 sont en contact l'une avec l'autre de sorte que le circuit électrique est fermé et qu'un courant électrique permet le fonctionnement du moteur 24. Ce moteur 24 provoque la rotation V de son arbre et du bras 53 portant la roulette 52. Lors de cette rotation, la roulette 52 frappe l'extrémité de la pièce 32 provoquant ainsi une légère rotation P de cette pièce 32 autour de l'arbre 31. Cette légère rotation P et la force de rappel du ressort 46 permettent, d'une part, au tenon 30 de ne plus prendre appui sur la partie 50 du contour 43 et, d'autre part, une rotation Q de la manette 18 de manière à ramener la mèche 11 dans le canal 10, c'est-à-dire de manière à arrêter le fonctionnement de l'appareil de façon définitive.

Cette rotation Q de la manette 18 provoque, grâce au glissement du tenon 30 dans la fente 35, une rotation P de la pièce 32 et donc un rapprochement M de la plaque 47 par rapport à l'interrupteur 45, de sorte que les extrémités de ce dernier ne sont plus en contact l'une avec l'autre. Le circuit électrique est ainsi ouvert et aucun courant électrique ne le parcourt, de sorte que le moteur électrique n'entraîne plus en rotation l'arbre portant le bras 53 muni d'une roulette 52.

Dans le dispositif de sécurité décrit ci-dessus, seule une puissance électrique est consommée pendant un laps de temps très court lorsque le bilame 22 détecte une température de 26°C après la mise en fonctionnement de l'appareil.

Une fois que le fonctionnement de l'appareil a été arrêté par le dispositif de sécurité, la remise en fonctionnement de l'appareil par rotation de la manette 18 (rotation R) n'est possible que lorsque la température du local est inférieure à la température de remise de l'état initial du bilame (lames non en contact l'une avec l'autre - reset temperature).

Dans l'exemple décrit ci-dessus, la température de remise a l'état initial était d'environ 20°C. Le temps nécessaire pour cette remise à l'état initial correspond à un temps d'aération du local assurant une évacuation suffisante de CO et de $CO_2$.

Dans une variante d'un dispositif de sécurité décrit ci-dessus, il comprend un capteur de mesure de la température relié via un convertisseur numérique à un ensemble électronique constitué d'un chip ou puce électronique comprenant une mémoire pour la température du local mesurée lors de la mise en fonctionnement de l'appareil. Le chip électronique contient également un programme destiné à comparer la température du local mesurée après la mise en fonctionnement de l'appareil à la température du local mesurée lors de la mise en fonctionnement de l'appareil et destiné, lorsque la température mesurée est supérieure d'environ 15°C à la température du local mesurée lors de la mise en fonctionnement de l'appareil, à envoyer un signal à un interrupteur de manière à permettre le passage d'un courant vers le moteur.

Le demandeur a effectué des essais de chauffage d'un local étanche dont la température initiale Ti était voisine d'environ 20°C.

Dans ces essais, on a mesuré la concentration en CO et $CO_2$ de l'air du local lors de l'arrêt du fonctionnement de l'appareil muni d'un dispositif de sécurité suivant l'invention, la température du local à l'arrêt, le temps de fonctionnement et la consommation de pétrole lampant ou désaromatisé (hydrocarbure ayant un point initial égal ou supérieur à 180°C et un écart de température entre les points initial et final de distillation inférieur ou égal à 65°C et dont le point éclair est égal ou supérieur à 45°C - Normes Françaises NF-M 07-002 et M 07-011).

Le tableau suivant reprend les valeurs des différents paramètres et résultats des essais.

TABLEAU

| Appareil | Ti °C | température de fonctionnement du bilame °C | débit de pétrole kg/h initial | à l'arrêt ou au temps t | temps de fonctionnement t minutes | température à l'arrêt ou au temps t °C | %CO | %CO$_2$ |
|---|---|---|---|---|---|---|---|---|
| 1 | 25 | 26 ± 3 | 0,205 | 0,205 | 7 | 31 arrêt | 0,0009 | 0,35 |
| 1 | 25 | pas de bilame | 0,205 | 0,164 | 45 | 40,5 | 0,0015 | 1,65 |
|  |  | arrêt par étouffement |  | 0,08 | 135 | 44 | 0,003 | 3,9 |
| 2 | 26 | 26 ± 3 | 0,3 | 0,3 | 4 | 31 (arrêt) | 0,0015 | 0,5 |
| 2 | 26 | pas de bilame | 0,3 | 0,13 | 90 | 52 | 0,005 | 4 |
|  |  | arrêt par étouffement |  |  |  |  |  |  |
| 3 | 10 | 26 ± 3 | 0,205 | 0,185 | 15 | 28 | 0,0002 | 0,65 |

Les différences existant entre la température de fonctionnement du bilame et la température du local à l'arrêt de l'appareil sont dues au temps de réponse du bilame et à la chaleur encore dégagée après extinction de la flamme. Ce temps de réponse est avantageusement d'environ 2 minutes (compris entre 30 secondes et 5 minutes) de manière à pouvoir ne pas prendre en considération l'influence d'éléments extérieurs placés de façon provisoire à proximité du bilame.

Ces essais ont été effectués dans un local étanche, c'est-à-dire dans les conditions les plus défavorables en ce qui concerne la teneur en CO ou CO$_2$ de l'air du local.

6

L'homme du métier ne pouvait s'attendre qu'en mesurant uniquement la température du local ou l'augmentation de température du local, il serait possible de prévenir que la teneur en CO et $CO_2$ de l'air du local dépasse respectivement 0,1 % et 1 %.

On notera que les appareils de chauffage à mèche ou à zone de combustion n'ont jamais été munis d'un système d'extinction totale commandé par une mesure de la température du local pour éviter une teneur en CO et $CO_2$ dans le local supérieure à 0,01 et 1 %. Par extinction totale, on entend une position dans laquelle la combustion n'a plus lieu et dans laquelle la remise en fonctionnement de l'appareil nécessite une manipulation de l'utilisateur.

En outre, les appareils de chauffage à mèche n'ont jamais été munis de thermostat puisque la hauteur de la flamme ne peut être réglée que dans une faible plage.

Suite à de nombreux essais effectués par le demandeur dans des locaux étanches et ayant une température initiale comprise entre 5 et 20°C, il est apparu que, lorsque l'appareil s'arrêtait automatiquement de fonctionner dès qu'une température de 26°C était détectée, dans le local et/ou dès qu'une température supérieure d'environ 15°C à la température initiale était détectée, il était possible de garantir une teneur en CO inférieure à 0,01 % et une teneur en $CO_2$ inférieure à 1 %.

La présente invention a donc également pour objet un procédé de chauffage d'un local utilisant un appareil suivant l'invention. Dans ce procédé, on détecte la température de l'air du local et dès que cette température est de 26°C, on actionne le mécanisme destiné à arrêter la combustion, en particulier le mécanisme de manoeuvre de la mèche, pour arrêter la combustion (pour assurer que l'extrémité de la mèche ne soit plus enflammée) de manière à éviter que la teneur en CO et la teneur en $CO_2$ dans le local soient respectivement supérieures à 0,01 % et 1 %.

Dans une forme de réalisation du procédé, on mesure la température de l'air du local lors de la mise en fonctionnement de l'appareil, on mesure de façon continue ou progressive la température de l'air du local et on la compare à celle mesurée lors de la mise en fonctionnement de l'appareil. Lorsque la température mesurée est supérieure de 15°C, à la température lors de la mise en fonctionnement, on actionne également le mécanisme, en particulier le mécanisme de manoeuvre de la mèche.

Bien que, selon la présente invention, l'appareil est avantageusement du type comprenant une mèche, l'invention s'applique également à des appareils comprenant un réservoir à pétrole, un évaporateur relié audit réservoir par un conduit et un distributeur et un brûleur.

## Revendications

1. Appareil mobile pour le chauffage d'appoint d'un local, cet appareil comprenant un réservoir à pétrole (1) relié à une mèche (11) ou une zone de combustion, un organe de mise en fonctionnement (12) de l'appareil et un mécanisme d'arrêt de la combustion, ce mécanisme étant commandé par un dispositif de sécurité (21) assurant l'extinction automatique de la combustion avant que la teneur en CO dans le local soit supérieure à 0,01 % et que la teneur en $CO_2$ dans le local soit supérieure à environ 1%, caractérisé en ce que ledit dispositif de sécurité comprend un moyen qui à une température d'environ 26°C agit sur un élément (51) agissant sur une pièce (32) du mécanisme d'arrêt de manière à assurer l'extinction automatique de la combustion avant que la teneur en CO dans le local soit supérieure à 0,01 % et que la teneur en $CO_2$ dans le local soit supérieure à environ 1 %, et sur un élément agissant sur l'organe de mise en fonctionnement (12) pour l'amener dans sa position de non fonctionnement.

2. Appareil suivant la revendication 1, caractérisé en ce que ledit dispositif de sécurité comprend un circuit électrique dans lequel sont montés un moteur (24) et un bilame (22) porté par ledit appareil qui à une température d'environ 26°C permet le passage d'un courant au moteur (24) qui entraîne alors un élément (51) agissant sur une pièce (32) du mécanisme d'arrêt de la combustion de manière à assurer l'extinction automatique de la combustion avant que la teneur en CO dans le local soit supérieure à 0,01 % et que la teneur en $CO_2$ dans le local soit supérieure à environ 1% , et sur un élément agissant sur l'organe de mise en fonctionnement (12) pour l'amener dans sa position de non fonctionnement.

3. Appareil suivant la revendication 2, caractérisé en ce que le bilame est un bilame (22) qui pour une température de 26°C permet le passage d'un courant au moteur (24) pour entraîner ledit élément (51).

4. Appareil suivant la revendication 2 ou 3, caractérisé en ce que le moteur (24) présente un arbre portant un bras (53), en ce que le circuit électrique comprend un contacteur (45) et en ce que ledit bras (53) est agencé pour pouvoir agir d'abord sur ladite pièce (32) et ensuite sur ledit contacteur (45) de manière à ouvrir le circuit pour arrêter l'entraînement de l'arbre.

5. Appareil mobile pour le chauffage d'appoint d'un local, cet appareil comprenant un réservoir à pétrole relié à une mèche en une zone de combustion, un organe de mise en fonctionnement de l'appareil et un mécanisme d'arrêt de la combustion, ce mécanisme étant commandé par un dispositif de sécurité assurant l'extinction automatique de la combustion avant que la teneur en CO dans le local soit supérieure à 0,01 % et que la teneur en $CO_2$ dans le local soit supérieur à environ 1%, caractérisé en ce que ledit dispositif de sécurité (21) comprend un moteur (24) alimenté par un circuit électrique comprenant :

un bilame (22) qui à une température d'environ 26 °C permet le passage d'un courant en moteur (24) qui entraîne un élément (51) agissant sur une pièce (32) du mécanisme d'arrêt de la combustion de manière à assurer l'extinction automatique de la combustion avant que la teneur en CO dans le local soit supérieure à 0,01 % et que la teneur en $CO_2$ dans le local soit supérieure à environ 1% , et un élément agissant sur l'organe de mise en fonctionnement (12) pour l'amener dans sa position de non fonctionnement, et

un contacteur commandé par un ensemble associé à un moyen de mesure de la température du local, ledit ensemble comparant la température du local à la température du local lors de sa mise en fonctionnement et actionnant ledit contacteur lorsque la température du local est supérieure d'environ 15° C par rapport à la température du local lors de sa mise en fonctionnement pour permettre le passage d'un courant au moteur qui entraîne alors un élément (51) agissant sur une pièce (32) du mécanisme d'arrêt de la combustion de manière à assurer l'extinction automatique de la combustion avant que la teneur en CO dans le local soit supérieure à 0,01 % et que la teneur en $CO_2$ dans le local soit supérieure à environ 1% et

un élément agissant sur l'organe de mise en fonctionnement (12) pour l'amener dans sa position de non fonctionnement

6. Procédé de chauffage d'un local à l'aide d'un appareil mobile d'appoint, cet appareil comprenant un réservoir à pétrole relié à une mèche ou une zone de combustion, un organe de mise en fonctionnement de l'appareil et un mécanisme d'arrêt de la combustion, ce mécanisme étant commandé par un dispositif de sécurité assurant l'extinction automatique de la combustion, dans lequel on actionne le mécanisme d'arrêt de la combustion lorsque la température du local est de 26°C pour assurer une teneur en CO et en $CO_2$ dans le local respectivement inférieure à 0,01 % et 0,8 %.

7. Procédé de chauffage d'un local à l'aide d'un appareil mobile d'appoint, cet appareil comprenant un réservoir à pétrole relié à une mèche en une zone de combustion, un organe de mise en fonctionnement de l'appareil et un mécanisme d'arrêt de la combustion, dans lequel on actionne le mécanisme d'arrêt de la combustion lorsque la température du local est de 26°C ou lorsque la température du local est supérieure de 15° C à la température de ce local lors de sa mise en fonctionnement pour assurer une teneur en CO et en $CO_2$ dans le local respectivement inférieure à 0,01 % et 0,8 %.

8. Utilisation d'un moyen qui à une température d'environ 26°C agit sur un élément, en tant que dispositif de sécurité d'un appareil mobile pour le chauffage d'appoint d'un local, cet appareil comprenant un réservoir à pétrole (1) relié à une mèche (11) ou une zone de combustion, un organe de mise en fonctionnement (12) de l'appareil et un mécanisme d'arrêt de la combustion, ledit élément (51) agissant, lorsque ledit moyen agit sur celui-ci, sur une pièce (32) du mécanisme d'arrêt de manière à assurer l'extinction automatique de la combustion avant que la teneur en CO dans le local soit supérieure à 0,01% et que la teneur en $CO_2$ dans le local soit supérieure à environ 1 %, et sur un élément agissant sur l'organe de mise en fonctionnement (12) pour l'amener dans sa position de non fonctionnement.

9. Utilisation suivant la revendication 8, caractérisé en ce que ledit moyen est un bilame.


**Claims**

1. Mobile apparatus for extra heating of a room, this apparatus comprising a paraffin tank (1) connected to a wick (11) or a combustion zone, a component (12) for starting the apparatus and a mechanism for shutting down combustion, this mechanism being controlled by a safety device (21) which automatically extinguishes combustion before the CO level in the room is greater than 0.01% and the $CO_2$ level in the

room is greater than approximately 1%, characterized in that the said safety device comprises a means which, at a temperature of approximately 26°C, acts on an element (51) acting on a part (32) of the shutdown mechanism so as automatically to extinguish combustion before the CO level in the room is greater than 0.01% and the $CO_2$ level in the room is greater than approximately 1%, and on an element acting on the starter component (12) in order to bring it into its inoperative position.

2. Apparatus according to Claim 1, characterized in that the said safety device comprises an electrical circuit in which are mounted a motor (24) and a bimetallic strip (22) carried by the said apparatus which, at a temperature of approximately 26°C, allowe a current to flow to the motor (24) which then drives an element (51) acting on a part (32) of the mechanism for shutting down combustion, so as automatically to extinguish combustion before the CO level in the room is greater than 0.01% and the $CO_2$ level in the room is greater than approximately 1%, and on an element acting on the starter component (12) in order to bring it into its inoperative position.

3. Apparatus according to Claim 2, characterized in that the bimetallic strip is a bimetallic strip (22) which, for a temperature of 26°C, allows a current to flow to the motor (24) in order to drive the said element (51).

4. Apparatus according to Claim 2 or 3, characterized in that the motor (24) has a shaft carrying an arm (53) and in that the electrical circuit comprises a contactor (45) and in that the said arm (53) is arranged in order to be capable of acting first on the said part (32) and then on the said contactor (45) so as to open the circuit in order to shut down driving of the shaft.

5. Mobile apparatus for extra heating of a room, this apparatus comprising a paraffin tank connected to a wick or a combustion zone, a component for starting the apparatus and a mechanism for shutting down combustion, this mechanism being controlled by a safety device which automatically extinguishes combustion before the CO level in the room is greater than 0.01% and the $CO_2$ level in the room is greater than approximately 1%, characterized in that the said safety device (21) comprises a motor (24) supplied by an electrical circuit comprising:
a bimetallic strip (22) which, at a temperature of approximately 26°C, allows a current to flow in the motor (24) which drives an element (51) acting on a part (32) for shutting down combustion so as automatically to extinguish combustion before the CO level in the room is greater than 0.01% and the $CO_2$ level in the room is greater than approximately 1%, and an element acting on the starter component (12) in order to bring it into its inoperative position, and a contactor controlled by an assembly associated with a means for measuring the temperature in the room, the said assembly comparing the temperature in the room with the temperature in the room when it is started and actuating the said contactor when the temperature in the room is greater by approximately 15°C with respect to the temperature in the room when it is started, in order to allow a current to flow to the motor which then drives an element (51) acting on a part (32) of the mechanism for shutting down combustion, so as automatically to extinguish combustion before the CO level in the room is greater than 0.01% and the $CO_2$ level in the room is greater than approximately 1% and an element acting on the starter component (12) in order to bring it into its inoperative position.

6. Method for heating a room with the aid of an extra mobile apparatus, this apparatus comprising a paraffin tank connected to a wick or a combustion zone, a component for starting the apparatus and a mechanism for shutting down combustion, this mechanism being controlled by a safety device which automatically extinguishes combustion, in which the mechanism for shutting down combustion is actuated when the temperature in the room is 26°C in order to guarantee a CO and $CO_2$ level in the room respectively less than 0.01% and 0.8%.

7. Method for heating a room with the aid of an extra mobile apparatus, this apparatus comprising a paraffin tank connected to a wick or a combustion zone, a component for starting the apparatus and a mechanism for shutting down combustion, in which the mechanism for shutting down combustion is actuated when the temperature in the room is 26°C or when the temperature in the room is greater by 15°C than the temperature in this room when it is started, in order to guarantee a CO and $CO_2$ level in the room respectively less than 0.01% and 0.8%.

8. Use of a means which, at a temperature of approximately 26°C, acts on an element, so as to constitute a safety device of a mobile apparatus for extra heating of a room, this apparatus comprising a paraffin tank (1) connected to a wick (11) or a combustion zone, a component (12) for starting the apparatus and a mechanism for shutting down combustion, the said element (51) acting, when the said means acts on it, on a part (32) of the shut-down mechanism so as automatically to extinguish combustion before the CO level in the room is greater than 0.01% and the $CO_2$ level in the room is greater than approximately 1%, and on an element acting on the starter component (12) in order to bring it into its inoperative position.

9. Use according to Claim 8, characterized in that the said means is a bimetallic strip.

**Patentansprüche**

1. Mobile Vorrichtung zur zusätzlichen Beheizung eines Raumes, die einen Kraftstoffbehalter (1), der mit einem Docht (11) oder einer Verbrennungszone verbunden ist, ein Organ (12) zur Betätigung der Vorrichtung sowie einen Mechanismus zum Abschalten der Verbrennung aufweist, wobei die Steuerung dieses Mechanismus über eine Sicherheitsvorrichtung (21) erfolgt, die eine automatische Abschaltung der Verbrennung vor Erreichen eines CO-Gehaltes in dem Raum oberhalb 0,01 % und eines $CO_2$-Gehaltes in dem Raum oberhalb ca. 1 % gewahrleistet, dadurch gekennzeichnet, daß die Sicherheitsvorrichtung mit einer Einrichtung versehen ist, die bei einer Temperatur von ca. 26 °C über ein Element (51) auf ein Teil (32) des Abschaltmechanismus einwirkt, um eine automatische Abschaltung der Verbrennung vor Erreichen eines CO-Gehaltes in dem Raum oberhalb 0,01 % und eines $CO_2$-Gehaltes in dem Raum oberhalb ca. 1 % zu gewährleisten, und auf ein Element, welches auf das Betätigungsorgan (12) einwirkt, um dieses in die Abschaltposition zu bringen.

2. Vorrichtung gemäß Anspruch 1, dadurch gekennzeichnet, daß die Sicherheitsvorrichtung einen elektrischen Schaltkreis aufweist, in welchem ein Motor (24) und ein an der Heizvorrichtung angebrachtes Bimetall (22) angeordnet sind, das bei einer Temperatur von ca. 26 °C eine Stromzufuhr zum Motor (24) ermöglicht, wodurch dann ein Element (51), das auf ein Teil (32) des Mechanismus zum Abschalten der Verbrennung einwirkt, angetrieben wird, um eine automatische Abschaltung der Verbrennung vor Erreichen eines CO-Gehaltes in dem Raum oberhalb 0,01 % und eines $CO_2$-Gehaltes in dem Raum oberhalb ca. 1 % zu gewährleisten und auf ein Element, das auf das Betätigungsorgan (12) einwirkt, um dieses in die Ausschaltposition zu bringen.

3. Vorrichtung gemäß Anspruch 2, dadurch gekennzeichnet, daß es sich bei dem Bimetall um ein Bimetall (22) handelt, das bei einer Temperatur von 26 °C die Stromzufuhr zum Motor (24) und damit den Antrieb des Elements (51) ermöglicht.

4. Vorrichtung gemäß Anspruch 2 oder 3, dadurch gekennzeichnet, daß der Motor (24) eine mit einem Arm (53) verbundene Welle aufweist, daß die elektrische Schaltung mit einem Schaltkontakt (45) ausgerüstet ist, und daß der Arm (53) so angeordnet ist, daß es zunächst das Teil (32) und dann den Schaltkontakt (45) betätigt, wodurch der Stromkreis unterbrochen und der Antrieb der Welle zum Stillstand gebracht wird.

5. Mobile Vorrichtung zur zusatzlichen Beheizung eines Raumes, die einen Kraftstoffbehälter, der mit einem Docht in einer Verbrennungszone verbunden ist, ein Organ zur Betätigung der Vorrichtung und einen Mechanismus zum Abschalten der Verbrennung aufweist, wobei die Steuerung dieses Mechanismus über eine Sicherheitsvorrichtung erfolgt, die eine automatische Abschaltung der Verbrennung vor Erreichen eines CO-Gehaltes in dem Raum oberhalb 0,01 % und eines $CO_2$-Gehaltes in dem Raum oberhalb ca. 1 % gewährleistet, dadurch gekennzeichnet, daß die Sicherheitsvorrichtung (21) einen über einen elektrischen Schaltkreis angetriebenen Motor (24) besitzt und der Schaltkreis ein Bimetall (22) aufweist, das bei einer Temperatur von ca. 26 °C die Stromzufuhr zum Motor (24) ermöglicht, wodurch ein auf ein Teil (32) des Mechanismus zur Abschaltung der Verbrennung einwirkendes Element (51) angetrieben wird und eine automatische Abschaltung der Verbrennung vor Erreichen eines CO-Gehaltes in dem Raum oberhalb 0,01 % und eines $CO_2$-Gehaltes in dem Raum oberhalb ca. 1 % gewährleistet, sowie ein Element, das auf das Betätigungsorgan (12) einwirkt, um dieses in die Ausschaltposition zu bringen, und einen Schaltkontakt, der durch eine mit einer Einrichtung zur Messung der Raumtemperatur verbundene Einheit gesteuert wird, die die Raumtemperatur mit derjenigen bei Inbetriebnahme vergleicht und den Schaltkontakt betätigt, sobald die Raumtemperatur um ca. 15 °C höher ist als diejenige bei Inbetriebnahme, um eine Stromzufuhr zum Motor zu ermöglichen, wodurch dann ein auf ein Teil (32) des Mechanismus zum Abschalten der Verbrennung einwirkendes Element (51) angetrieben wird und eine automatische Abschaltung der Verbrennung vor Erreichen eines CO-Gehaltes in dem Raum oberhalb 0,01 % und eines $CO_2$-Gehaltes in dem Raum oberhalb ca. 1 % gewährleistet, sowie ein Element, welches auf das Betätigungsorgan (12) einwirkt, um dieses in die Ausschaltposition zu bringen.

6. Verfahren zur Beheizung eines Raumes unter Verwendung einer mobilen Zusatzheizvorrichtung, die einen Kraftstoffbehälter, der mit einem Docht oder einer Verbrennungszone verbunden ist, ein Organ zur Betätigung der Vorrichtung und einen Mechanismus zum Abschalten der Verbrennung aufweist, wobei die Steuerung dieses Mechanismus über eine Sicherheitsvorrichtung erfolgt, die eine automatische Abschaltung der Verbrennung gewährleistet, wobei der Mechanismus zum Abschalten der Verbrennung bei einer Raumtemperatur von 26 °C in Gang gesetzt wird, um zu gewährleisten, daß der CO- und $CO_2$-Gehalt innerhalb des Raumes unter 0,01 bzw. 0,8 % liegt.

7. Verfahren zur Beheizung eines Raumes unter Verwendung einer mobilen Zusatzheizvorrichtung, die einen Kraftstoffbehälter, der mit einem Docht in einer Verbrennungszone verbunden ist, ein Organ zur Betätigung der Vorrichtung sowie einen Mechanismus zum Abschalten der Verbrennung aufweist, wobei der Mechanismus zum Abschalten der Verbrennung bei einer Raumtemperatur von 26 °C oder bei Erreichen einer Raumtemperatur, die um 15 °C höher ist als die Raumtemperatur bei Inbetriebnahme, in Gang gesetzt wird, um zu gewährleisten, daß der CO- und $CO_2$-Gehalt innerhalb des Raumes unter 0,01 % bzw. 0,8 % liegt.

8. Verwendung einer Einrichtung, die bei einer Temperatur von ca. 26 °C ein als Sicherheitsvorrichtung einer mobilen Vorrichtung zur zusätzlichen Beheizung eines Raumes funktionierendes Element betätigt, wobei die Heizvorrichtung einen Kraftstoffbehälter (1), der mit einem Docht (11) oder einer Verbrennungszone verbunden ist, ein Organ (12) zur Betätigung der Heizvorrichtung sowie einen Mechanismus zum Abschalten der Verbrennung aufweist, wobei das Element (51) unter Einwirkung der genannten Einrichtung ein Teil (32) des Abschaltmechanismus betätigt, um eine automatische Abschaltung der Verbrennung vor Erreichen eines CO-Gehaltes in dem Raum oberhalb 0,01 % und eines $CO_2$-Gehaltes in dem Raum oberhalb ca. 1 % zu gewährleisten, und auf ein Element, welches auf das Betätigungsorgan (12) einwirkt, um dieses in die Ausschaltposition zu bringen.

9. Verwendung gemäß Anspruch 8, dadurch gekennzeichnet, daß es sich bei der genannten Einrichtung um ein Bimetall handelt.

FIG. 1

FIG. 2

FIG. 3

EP 0 473 563 B1

FIG. 4

FIG. 5

EP 0 473 563 B1

FIG.6

FIG. 7

FIG.8

FIG. 9